# EUROPÄISCHE PATENTANMELDUNG

(11) **EP 2 068 172 A2**
(43) Veröffentlichungstag der Anmeldung: **10.06.2009**
(21) Anmeldenummer: 08105549.3
(22) Anmeldetag: 10.10.2008
(51) Int. Cl.: G01S 13/44, G01S 13/42, G01S 13/93, G01S 13/72

(54) **Adaptives Platzieren von Nullstellen im Monopuls-Differenz-Antennendiagramm zur verbesserten Winkelauflösung an Objektorten**

(30) Priorität: 04.12.2007 DE 102007058241
(71) Anmelder: Robert Bosch GmbH, 70442 Stuttgart (DE)
(72) Erfinder: Hildebrandt, Juergen, 73235 Weilheim (DE); Hauk, Joachim, 71272 Renningen-Malmsheim (DE)

(57) **Zusammenfassung**

Die Erfindung betrifft ein Auswerteverfahren, insbesondere für ein Fahrerassistenzsystem eines Kraftfahrzeugs, zur Objektdetektion mittels eines Radarsensors, welcher wenigstens zwei separate Radarstrahlkeulen (Beam1 bis Beam4), welche einen abzutastenden Winkelbereich abdecken, zeitlich synchron aussendet und deren jeweilige Zielantworten als Messwerte empfängt. Wenigstens zwei Zielantworten der wenigstens zwei separaten Radarstrahlkeulen (Beam2, Beam3) des Radarsensors werden derart rechnerisch überlagert, dass eine synthetische Radarstrahlkeule (BeamS1) mit wenigstens einer vorbestimmten Nullstelle (N1) in dem abgetasteten Winkelbereich entsteht.

## Beschreibung

### Stand der Technik

Die Erfindung betrifft ein Auswerteverfahren, insbesondere für ein Fahrerassistenzsystem eines Kraftfahrzeugs, zur Objektdetektion mittels eines Radarsensors gemäß dem Oberbegriff von Anspruch 1. Die Erfindung betrifft ebenfalls ein Verfahren zur Kollisionsvermeidung für ein Kraftfahrzeug. Des weiteren betrifft die Erfindung ein Computerprogramm, ein Computerprogrammprodukt und eine Vorrichtung, um derartige Verfahren auszuführen bzw. durchzuführen.

Ein Auswerteverfahren zur Objektdetektion bzw. ein Objektdetektionsystem kann beispielsweise im Rahmen einer adaptiven Fahrgeschwindigkeits- und/oder -abstandsregelung bzw. eines Fahrerassistenzsystems eines Kraftfahrzeugs eingesetzt werden. Eine solche Regelung kann ohne Eingriff durch den Fahrer eine zuvor eingestellte Fahrgeschwindigkeit und/oder einen zuvor eingestellten Abstand zu einem vorausfahrenden Fahrzeug oder zu sich in Fahrtrichtung befindlichen Gegenständen bzw. Zielobjekten regeln. Dies geschieht unter entsprechender Berücksichtigung des Umfelds des Kraftfahrzeugs und gegebenenfalls weiterer Parameter, wie beispielsweise den aktuellen Witterungs- und Sichtbedingungen. Eine derartige Regelung wird auch als adaptive Geschwindigkeitsregelung bzw. ACC (adaptive cruise control)-System bezeichnet. In der Publikation der Robert Bosch GmbH "Adaptive Fahrgeschwindigkeitsregelung ACC, Gelbe Reihe, Ausgabe 2002, Technische Unterrichtung" sind derartige adaptive Geschwindigkeitsregelvorrichtungen beschrieben. Das ACC-System muss insbesondere im Hinblick auf die steigende Verkehrsdichte der heutigen Zeit flexibel genug sein, um auf alle Fahrsituationen geeignet zu reagieren. Dies erfordert wiederum eine entsprechende Objektsdetektionssensorik, um in jeder Fahrsituation die für die Regelung notwendigen Messdaten hinsichtlich erkannter Zielobjekte bzw. Hindernisse zu liefern.

Im Rahmen eines Fahrerassistenzsystems für ein Kraftfahrzeug kann auch ein Verfahren zur Kollisionsvermeidung implementiert sein, bei welchem bei wenigstens einem sich während der Fahrt nähernden Hindernis ein Fahrmanöver des Kraftfahrzeugs autonom oder semiautonom durchgeführt oder vorgeschlagen wird. Das wenigstens eine Hindernis wird ebenfalls mittels eines Auswerteverfahrens zur Objektdetektion bzw. eines Objektdetektionssystems erfasst.

Häufig werden derartige Objektdetektionssysteme oder Abstandssensoren mittels Radarsensoren realisiert. In der DE 195 30 065 A1 wird ein monostatischer FMCW-Radarsensor für ein Fahrzeug zur Detektion von Objekten vorgeschlagen, bei dem wenigstens ein Antennen-Feed in Verbindung mit einer dielektrischen Linse sowohl zum Senden als auch zum Empfangen eines entsprechenden Echosignals ausgebildet ist. Mehrere Sende-/Empfangsantennen sind über eine gemeinsame Linse fokussiert. Der beschriebene FMCW-Radarsensor weist drei nebeneinander liegende Strahlungskeulen auf, welche sich teilweise überschneiden können und die aktive Fläche darstellen, in der ein Objekt erkannt werden kann. Bei Verwendung in einem Kraftfahrzeug können somit auch mehrere Objekte gleichzeitig detektiert werden. Dabei kann unterschieden werden, ob die Objekte in Fahrtrichtung des Kraftfahrzeugs fahren, am Fahrbahnrand stehen oder entgegen kommen.

Insbesondere im Hinblick auf den benötigten Bauraum bzw. den zu wählenden Einbauort derartiger Radarsensoren ist es wünschenswert, diese in ihren Abmessungen so klein wie möglich auszuführen. Die dadurch bedingte relativ geringe Apertur, insbesondere der strahlformenden optischen Elemente bzw. des Radarsensors resultiert in einem geringen Winkeltrennvermögen aufgrund der entsprechenden hinsichtlich des Winkelbereichs relativ breiten Radarstrahlkeulen bzw. Beams. Üblich sind Beams mit 6 dB-Breiten mit einem Winkelbereich von deutlich über 5°. Mit bekannten Auswerteverfahren zur Objektdetektion lassen sich beispielsweise Zielobjekte, welche 2° voneinander beabstandet sind, nicht separieren bzw. trennen. Dies könnte aber etwa bei einer sogenannten Gassensituation, insbesondere auf einer mehrspurigen Autobahn oder dergleichen, wichtig sein, falls sich das eigene Fahrzeug auf der mittleren Spur befindet und in Fahrtrichtung vor dem eigenen Fahrzeug sich auf der rechten und der linken Spur ebenfalls Fahrzeuge befinden. Je nach Abstand von den Fremdfahrzeugen kommt es nun vor, dass die einzelnen Radarstrahlkeulen mehrere Fahrspuren abdecken und somit nicht mehr ermittelt werden kann, ob sich die detektierten Zielobjekte auf der rechten und der linken Spur befinden oder ob sich ein weiteres Zielobjekt auf der mittleren Spur, d. h. der Spur, welche von dem eigenen Fahrzeug befahren wird, befindet, da die Zielobjekte zu einem Ziel verschmelzen und bezüglich des Winkels in Einzelmessungen nicht mehr trennbar sind.

Zum Stand der Technik hinsichtlich Objektdetektionssystemen, insbesondere für ein Kraftfahrzeug, wird auf die DE 199 34 670 A1 verwiesen.

### Vorteile der Erfindung

Das erfindungsgemäße Auswerteverfahren, insbesondere für ein Fahrerassistenzsystems eines Kraftfahrzeugs zur Objektdetektion mittels eines Radarsensors, welcher wenigstens zwei separate Radarstrahlkeulen, welche einen abzutastenden Winkelbereich abdecken, zeitlich synchron aussendet und deren jeweilige Zielantworten als Messwerte empfängt, wobei wenigstens zwei Zielantworten (d. h. jeweils eine Zielantwort je Radarstrahlkeule) der wenigstens zwei separaten Radarstrahlkeulen des Radarsensors derart rechnerisch überlagert werden, dass eine synthetische Radarstrahlkeule mit wenigstens einer vorbestimmten Nullstelle in dem abgetasteten Winkelbereich entsteht, ermöglicht in einfacher und vorteilhafter Weise eine deutliche Verbesserung der Auflösung bzw. Winkeltrennung bei der Objektdetektion. Dies kann ohne zusätzlichen Einsatz von Hardware lediglich mittels spezieller Softwareroutinen bzw. einer modifizierten Auswertemethode bei der Objektdetektion mittels des Radarsensors geschehen. Wird z. B. ein entsprechendes Zielobjekt auf der eigenen Spur in einer bestimmten Position, d. h. unter einem bestimmten Winkel detektiert, so kann durch eine entsprechende Überlagerung der Zielantworten aus zwei Beams bzw. separaten Radarstrahlkeulen des Radarsensors ein synthetischer Beam gebildet werden, welcher eine scharfe Nullstelle an der detektierten Position aufweist. Anschließend kann durch Verlegen der Nullstelle auf den gemessenen Winkel überprüft werden, ob nur ein Zielobjekt an dieser Winkelposition oder beispielsweise mehrere Zielobjekte bei versetztem Winkel vorliegen. Liegt tatsächlich nur ein Zielobjekt vor, so muss dessen Pegel sehr stark abnehmen. Ergibt sich das Zielobjekt nun aus einer Überlagerung von zwei Zielobjekten (beispielsweise in 120 m Abstand, je 3 m seitlich versetzt auf den Nebenspuren), so würde die Signalamplitude nur einen kleineren Teil abnehmen und nicht verschwinden. Dadurch ergibt sich eine zusätzliche Information hinsichtlich der Winkelauflösung. Mit Hilfe des Phasengangs zwischen den Beams bzw. Radarstrahlkeulen der Radarsensoren kann ein Filterverhalten mit ausreichend steilen Flanken erreicht werden. Durch die Nullstelle entsteht eine Art Winkel-Notch bzw. ein Winkel-Notch-Filter.

Die rechnerische Überlagerung kann mittels einer komplexen Gewichtung wenigstens einer der wenigstens zwei Zielantworten derart durchgeführt werden, dass sich für ein Zielobjekt, welches an der wenigstens einen vorbestimmten Nullstelle detektiert wurde, die wenigstens zwei Zielantworten zu Null summieren. Unter Berücksichtigung der Verhältnisse zwischen den Radarstrahlkeulen bzw. Beams gemäß einer Referenzmessung wird nun einer der Beams mit dem Betragsquotienten zu einem weiteren Beam an der Stelle, an der die Nullstelle entstehen soll, multipliziert und durch Phasendrehung, welche den Phasenunterschied an der für die Nullstelle gewünschten Winkelposition zwischen den beiden Beams egalisiert (d. h. hinsichtlich des Pegels gleich jedoch mit einem Phasenunterschied von 180°), modifiziert und von dem weiteren Beam subtrahiert.

Wie vorstehend bereits ausgeführt, ist es vorteilhaft, wenn die wenigstens eine vorbestimmte Nullstelle auf den Winkelwert des detektierten Zielobjekts gelegt wird. Dadurch erhält man weitere Informationen über das Zielobjekt.

Des weiteren kann die wenigstens eine vorbestimmte Nullstelle auf den Winkelwert der Mitte der vor dem Kraftfahrzeug liegenden Fahrspur, gelegt werden.

In einer verfahrensmäßigen Ausgestaltung der Erfindung kann ferner vorgesehen sein, dass ein scannendes Verschieben der wenigstens einen vorbestimmten Nullstelle in dem abgetasteten Winkelbereich rechnerisch durchgeführt wird.

Durch ein Wandern des Winkel-Notches bzw. Verschieben der Nullstelle kann somit eine Art Scanning bei einer einzelnen Messung durchgeführt werden, wodurch sozusagen ein virtueller Schwenk erfolgt.

In Anspruch 6 ist ein Verfahren zu Kollisionsvermeidung für ein Kraftfahrzeug angegeben.

Ein Computerprogramm mit Programmcodemitteln bzw. ein Computerprogrammprodukt mit Programmcodemitteln, die auf einem computerlesbaren Datenträger gespeichert sind, um die erfindungsgemäßen Verfahren auszuführen, sind in Anspruch 7 bzw. Anspruch 8 angegeben.

Anspruch 9 betrifft eine Vorrichtung, insbesondere ein Fahrerassistenzsystem eines Kraftfahrzeugs, zur Durchführung der erfindungsgemäßen Verfahren.

Das erfindungsgemäße Auswerteverfahren bzw. das Verfahren zur Kollisionsvermeidung für ein Kraftfahrzeug ist vorzugsweise als Computerprogramm auf einer Steuereinrichtung eines Fahrerassistenzsystems eines Kraftfahrzeugs bzw. eines Radarsensors realisiert, wobei auch andere Lösungen selbstverständlich in Frage kommen. Dazu ist das Computerprogramm in einem Speicherelement der Steuereinrichtung gespeichert. Durch Abarbeitung auf einem Mikroprozessor der Steuereinrichtung wird das Verfahren ausgeführt. Das Computerprogramm kann auf einen computerlesbaren Datenträger (Diskette, CD, DVD, Festplatte, USB-Memory-Stick, Speicherkarte oder dergleichen) oder einem Internetserver als Computerprogrammprodukt gespeichert sein und von dort aus in das Speicherelement der Steuereinrichtung übertragen werden.

Vorteilhafte Ausgestaltungen und Weiterbildungen der Erfindung ergeben sich aus den Unteransprüchen. Nachfolgend ist anhand der Zeichnung ein Ausführungsbeispiel der Erfindung prinzipmäßig beschrieben.

### Kurzbeschreibung der Zeichnung

Es zeigen:
- Figur 1: eine schematische Darstellung der wesentlichen Komponenten eines ACC- Systems bzw. einer adaptiven Geschwindigkeitsregelvorrichtung als Fahreras- sistenzsystem auf dessen Steuereinrichtung ein erfindungsgemäßes Auswerte- verfahren bzw. ein Verfahren zur Kollisionsvermeidung ablaufen kann;
- Figur 2: ein schematisches Antennendiagramm eines Radarsensors;
- Figur 3: ein schematisches Antennendiagramm eines Radarsensors mit einer syntheti- schen Radarstrahlkeule; und
- Figur 4: ein schematisches Antennendiagramm eines Radarsensors mit einer weiteren synthetischen Radarstrahlkeule.

### Beschreibung von Ausführungsbeispielen

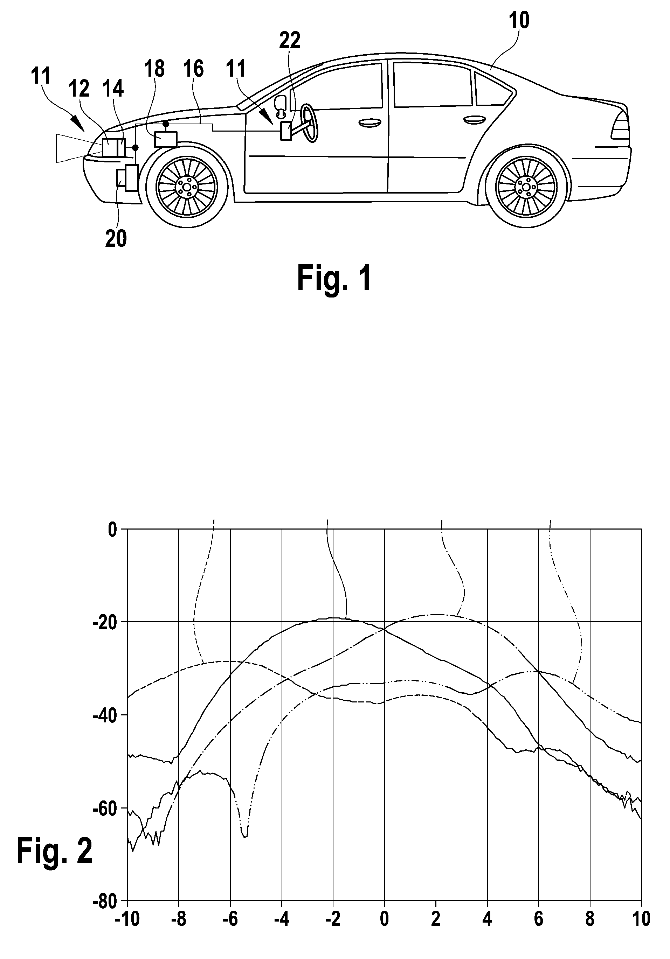

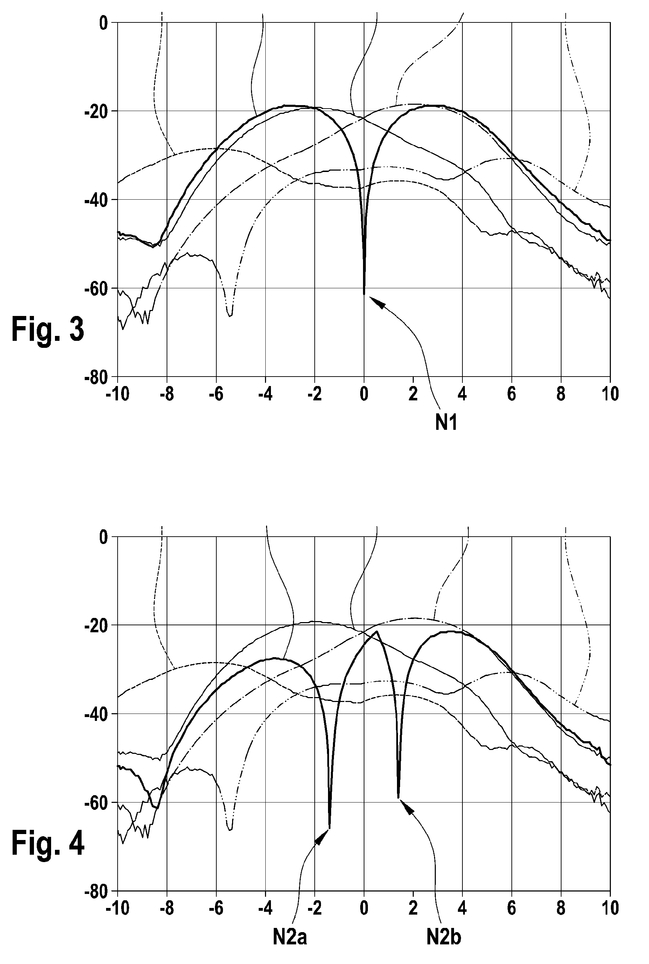

Ein in Figur 1 stark vereinfacht dargestelltes Kraftfahrzeug 10 mit einem ACC-System bzw. einer adaptiven Geschwindigkeitsregelvorrichtung 11 als Fahrerassistenzsystem weist als Abstandssensor einen an der Frontpartie des Kraftfahrzeugs 10 angebrachten Radarsensor 12 auf, in dessen Gehäuse auch eine ACC-Steuereinheit 14 untergebracht ist. Die ACC-Steuereinheit 14 ist über einen Datenbus 16 (CAN, MOST oder dergleichen) mit einer elektronischen Antriebs-Steuereinheit 18, einer Bremssystem-Steuereinheit 20 sowie mit einer HMI-Steuereinheit 22 einer Mensch/Maschine-Schnittstelle verbunden. Der Radarsensor 12 misst mit Hilfe von in Figur 2 vereinfacht in einem beispielhaften charakteristischen Antennendiagramm des Radarsensors 12 dargestellten Radarstrahlkeulen Beam1, Beam2, Beam3, Beam4 die Abstände, Relativgeschwindigkeiten und Azimutwinkel von vor dem Fahrzeug befindlichen nicht dargestellten Zielobjekten, welche Radarwellen reflektieren. In Figur 2 bzw. grundsätzlich auch in den Figuren 3 und 4 sind Antennendiagramme bzw. Azimutwinkeldiagramme von Horizontalschnitten von vier Radarstrahlkeulen Beam1 bis Beam4 dargestellt, welche den Erfassungsbereich des Radarsensors 12 angeben. Dabei ist horizontal der Azimutwinkel in Grad (°) und vertikal der Pegel in Dezibel aufgetragen. Vor dem Einsatz des Radarsensors 12 wird eine sogenannte Referenzmessung durchgeführt, in welcher die speziellen Verhältnisse hinsichtlich Leistungs- und Phasenunterschied zwischen den einzelnen Radarstrahlkeulen Beam1 bis Beam4 ermittelt werden.

Die während des Einsatzes in regelmäßigen Zeitabständen, z. B. alle 10 ms empfangenen Radarrohdaten werden in der ACC-Steuereinheit 14 ausgewertet, um einzelne Zielobjekte zu identifizieren und zu verfolgen und um insbesondere ein unmittelbar auf der eigenen Fahrspur vorausfahrendes Fahrzeug zu erkennen und als Zielobjekt auszuwählen. Durch Befehle an die Antriebs-Steuereinheit 18 und die Bremssystem-Steuereinheit 20 regelt die ACC-Steuereinheit 14 als Einrichtung zur Bestimmung des Beschleunigungs- und Verzögerungsbedarfs die Geschwindigkeit des Fahrzeugs 10. Wenn kein vorausfahrendes Fahrzeug geortet wird, regelt die ACC-Steuereinheit 14 die Geschwindigkeit des Kraftfahrzeugs 10 auf eine vom Fahrer gewählte Wunschgeschwindigkeit. Ist dagegen ein vorausfahrendes Fahrzeug, dessen Geschwindigkeit kleiner ist als die des eigenen Fahrzeugs, als Zielobjekt erfasst worden, so wird die Geschwindigkeit des Kraftfahrzeugs 10 derart geregelt, dass ein angemessener Abstand zu dem vorausfahrenden Fahrzeug eingehalten wird. Des weiteren kann im Rahmen des Fahrerassistenzsystems ein Verfahren zur Kollisionsvermeidung für das Kraftfahrzeug 10, bei welchem bei wenigstens einem sich während der Fahrt nähernden Hindernis ein Fahrmanöver des Kraftfahrzeugs 10 autonom oder semiautonom durchgeführt oder vorgeschlagen wird, eingesetzt werden.

Das Fahrerassistenzsystem bzw. die adaptive Geschwindigkeitsregelvorrichtung 11 bedient sich dabei eines erfindungsgemäßen Auswerteverfahrens zur Objektdetektion mittels des Radarsensors 12, welcher die separaten Radarstrahlkeulen Beam1 bis Beam4, welche einen abzutastenden Winkelbereich abdecken (in den Figuren 2, 3 und 4 beispielsweise -10° bis +10°), zeitlich synchron aussendet und deren jeweilige Zielantworten als Messwerte empfängt. Wie aus Figur 3 ersichtlich, werden zwei Zielantworten der zwei separaten Radarstrahlkeulen Beam2, Beam3 des Radarsensors 12 derart rechnerisch überlagert, dass eine synthetische Radarstrahlkeule BeamS1 mit einer vorbestimmten Nullstelle N1 in dem abgetasteten Winkelbereich entsteht. Die rechnerische Überlagerung wird mittels einer komplexen Gewichtung einer der zwei Zielantworten der Radarstrahlkeulen Beam2, Beam3 derart durchgeführt, dass sich für ein Zielobjekt, welches an der vorbestimmten Nullstelle N1 detektiert wurde, die zwei Zielantworten zu Null summieren. Wird nun die Nullstelle N1 auf den Winkelwert eines detektierten Zielobjekts - im vorliegenden Ausführungsbeispiel bei 0° - gelegt, erhält man dadurch weitere Informationen über das Zielobjekt. In weiteren nicht dargestellten Ausführungsbeispielen kann die wenigstens eine vorbestimmte Nullstelle auch auf den Winkelwert der Mitte der vor dem Kraftfahrzeug 10 liegenden Fahrspur, gelegt werden. Des weiteren kann vorgesehen sein, dass ein scannendes Verschieben der wenigstens einen vorbestimmten Nullstelle in dem abgetasteten Winkelbereich rechnerisch durchgeführt wird. Im vorliegenden Ausführungsbeispiel wird das Zielobjekt wie vorstehend bereits erwähnt von dem Radarsensor 12 unter einem Winkelwert von 0° detektiert. Dieses Zielobjekt ergibt sich jedoch in Wirklichkeit aus einer Überlagerung von zwei Zielobjekten, welche sich beispielsweise in 120 m Abstand, je 3 m seitlich versetzt auf den Nebenspuren bzw. rechts und links des Kraftfahrzeugs 10 unter -1,4° und +1,4° befinden. Wird nun die Nullstelle N1 der synthetische Radarstrahlkeule BeamS1 auf den Winkelwert 0° des detektierten Zielobjekts gelegt, kann geprüft werden, ob nur ein Zielobjekt bei 0° oder mehrere Zielobjekte bei versetzten Winkeln vorliegen. Würde nur ein Zielobjekt unter 0° vorliegen, so müsste sich dessen Pegel bei der Detektion sehr stark verringern. Sollte dies nicht der Fall sein, kann auch die nachfolgend beschriebene Gegenprobe vorgenommen werden. Unter der Annahme, dass sich die beiden tatsächlich vorhandenen Zielobjekte unter -1,4° und +1,4° befinden können analog zu der in Figur 3 dargestellten synthetischen Radarstrahlkeule BeamS1 mit der Nullstelle bei 0° auch eine erste synthetische Radarstrahlkeule mit einer Nullstelle bei -1,4° und zweite synthetische Radarstrahlkeule mit einer Nullstelle bei +1,4°, insbesondere nacheinander, errechnet werden. Ein Minimum der Beträge aus der ersten und der zweiten synthetischen Radarstrahlkeule ergibt dann die in Figur 4 dargestellte synthetische Radarstrahlkeule BeamS2 mit Nullstellen N2a, N2b bei -1,4° und +1,4°. Die beiden separierten Zielobjekte werden dann stark bedämpft und es kann erkannt werden, ob sich dazwischen noch ein Zielobjekt befindet, welches dadurch erkennbar wird, dass sich der Pegel gegenüber den Messwerten aus den Zielantworten der Radarstrahlkeulen Beam2, Beam3 nur wenig verringert. Das erzielbare Trennvermögen ist somit sehr hoch, z. B. ist eine Separierung der Nullstellen von nur 1,6° denkbar. In vorteilhafter Weise können somit durch das erfindungsgemäße Auswerteverfahren zusätzliche Informationen hinsichtlich der Winkelauflösung in Erfahrung gebracht werden.

Das erfindungsgemäße Auswerteverfahren bzw. das Verfahren zur Kollisionsvermeidung für das Kraftfahrzeug 10 ist vorzugsweise als Computerprogramm auf der Steuereinrichtung 14 des Fahrerassistenzsystems 11 des Kraftfahrzeugs 10 bzw. des Radarsensors 12 realisiert, wobei auch andere Lösungen selbstverständlich in Frage kommen. Dazu ist das Computerprogramm in einem Speicherelement der Steuereinrichtung 14 gespeichert. Durch Abarbeitung auf einem Mikroprozessor der Steuereinrichtung 14 wird das Verfahren ausgeführt. Das Computerprogramm kann auf einen computerlesbaren Datenträger (Diskette, CD, DVD, Festplatte, USB-Memory-Stick, Speicherkarte oder dergleichen) oder einem Internetserver als Computerprogrammprodukt gespeichert sein und von dort aus in das Speicherelement der Steuereinrichtung 14 übertragen werden.

## Patentansprüche

1. Auswerteverfahren, insbesondere für ein Fahrerassistenzsystem (11) eines Kraftfahrzeugs (10), zur Objektdetektion mittels eines Radarsensors (12), welcher wenigstens zwei separate Radarstrahlkeulen (Beam1 bis Beam4), welche einen abzutastenden Winkelbereich abdecken, zeitlich synchron aussendet und deren jeweilige Zielantworten als Messwerte empfängt, **dadurch gekennzeichnet, dass** wenigstens zwei Zielantworten der wenigstens zwei separaten Radarstrahlkeulen (Beam2, Beam3) des Radarsensors (12) derart rechnerisch überlagert werden, dass eine synthetische Radarstrahlkeule (BeamS1, BeamS2) mit wenigstens einer vorbestimmten Nullstelle (Nl,N2a,N2b) in dem abgetasteten Winkelbereich entsteht.

2. Auswerteverfahren nach Anspruch 1, **dadurch gekennzeichnet, dass** die rechnerische Überlagerung mittels einer komplexen Gewichtung wenigstens einer der wenigstens zwei Zielantworten derart durchgeführt wird, dass sich für ein Zielobjekt, welches an der wenigstens einen vorbestimmten Nullstelle (N1,N2a,N2b) detektiert wurde, die wenigstens zwei Zielantworten zu Null summieren.

3. Auswerteverfahren nach Anspruch 1 oder 2, **dadurch gekennzeichnet, dass** die wenigstens eine vorbestimmte Nullstelle (N1,N2a,N2b) auf den Winkelwert des detektierten Zielobjekts gelegt wird.

4. Auswerteverfahren nach Anspruch 1 oder 2, **dadurch gekennzeichnet, dass** die wenigstens eine vorbestimmte Nullstelle (N1,N2a,N2b) auf den Winkelwert der Mitte der vor dem Kraftfahrzeug (10) liegenden Fahrspur, gelegt wird.

5. Auswerteverfahren nach Anspruch 1 oder 2, **dadurch gekennzeichnet, dass** ein scannendes Verschieben der wenigstens einen vorbestimmten Nullstelle (N1) in dem abgetasteten Winkelbereich durchgeführt wird.

6. Verfahren zur Kollisionsvermeidung für ein Kraftfahrzeug (10), bei welchem bei wenigstens einem sich während der Fahrt nähernden Hindernis ein Fahrmanöver des Kraftfahrzeugs (10) autonom oder semiautonom durchgeführt oder vorgeschlagen wird, wobei das wenigstens eine Hindernis mittels eines Auswerteverfahrens zur Objektdetektion nach einem der Ansprüche 1 bis 5 erfasst wird.

7. Computerprogramm mit Programmcodemitteln, um ein Verfahren gemäß einem der Ansprüche 1 bis 6 durchzuführen, wenn dass Programm auf einem Mikroprozessor eines Mikrocomputers, insbesondere auf einer Steuereinrichtung (14) eines Fahrerassistenzsystems (11) oder eines Radarsensors (12), ausgeführt wird.

8. Computerprogrammprodukt mit Programmcodemitteln, die auf einem computerlesbaren Datenträger gespeichert sind, um ein Verfahren gemäß einem der Ansprüche 1 bis 6 durchzuführen, wenn dass Programm auf einem Mikroprozessor eines Mikrocomputers, insbesondere auf einer Steuereinrichtung (14) eines Fahrerassistenzsystems (11) oder eines Radarsensors (12), ausgeführt wird.

9. Vorrichtung, insbesondere Fahrerassistenzsystem (11) eines Kraftfahrzeugs (10), zur Durchführung des Verfahrens gemäß einem der Ansprüche 1 bis 6, mit wenigstens einem Radarsensor (12) zur Detektion von Objekten oder Hindernissen in einer Umgebung des Kraftfahrzeugs (10), und einer Steuereinrichtung (14), welche mit dem wenigstens einen Radarsensor (12) verbunden ist und welche zur Ausführung eines Computerprogramms gemäß Anspruch 7 eingerichtet ist.
